# EUROPEAN PATENT APPLICATION

(11) **EP 3 059 610 A1**
(43) Date of publication of application: **24.08.2016**
(21) Application number: 15200591.4
(22) Date of filing: 16.12.2015
(51) Int. Cl.: G01S 15/88, G01S 7/539

(54) **SYSTEM FOR MONITORING BOTTOM SHAPE NEAR BRIDGE SUPPORTS**

(30) Priority: 18.02.2015 PL 41130015
(71) Applicant: Instytut Badawczy Dróg I Mostów, 03-302 Warszawa (PL); Escort Sp. z o.o., 70-103 Szczecin (PL)
(72) Inventor: CIESLA, Juliusz, 02-106 Warszawa (PL); TOPCZEWSKI, Lukasz, 03-984 Warszawa (PL); MIKOLAJEWSKI, Pawel, 71-471 Szczecin (PL); ADAMSKI, Pawel, 59-300 Lubin (PL); LUBEK, Slawomir, 71-220 Bezrzecze (PL); MARKOWSKI, Zenon, 70-744 Szczecin (PL); MOTYLINSKI, Marcin, 71-677 Szczecin (PL)
(74) Representative: Adamczyk, Piotr

(57) **Abstract**

The system comprise a sonar (1) installed below the water level, a control centre (4), with a monitoring and controlling computer (17) and a wireless communication module (18) embedded, and an external power supply (5) for the control centre (4). The control centre (4) is installed above the water level. The sonar (1) is connected by a power/signal cable (14) to the monitoring and controlling computer (17) of the control centre (4), and it is equipped with a hydroacoustic transducer (10), with a controller (12), and with a positioning mechanism (11) for the position of the hydroacoustic transducer (10).

## Description

The object of the invention is a system for monitoring bottom shape near bridge supports, operated remotely and automatically.

Shape of a bottom around bridge supports is changing due to strong currents, occurring particularly during the passage of high flood water. Observing the rate and degree of changes to the shape of the bottom in real time is necessary to ensure safety of buildings, and to quickly react if supports are washed out, which is dangerous for the building and increases the risk of disaster.
From CN102087360 there is known a system for monitoring local bottom degradation near support. A set of ultrasonic probes was used as the signal transmitter used to gather underwater data. Data gathered from the feedback signal are transmitted to the server containing a special module for interpreting information about the level of bed degradation around the support. The system can download data in real time, by probing large areas around the surveyed support, and transmit data to the server via a wireless communication module. KR100832924 discloses a measuring instrument for accurate measurements of the level of bottom degradation around bridge supports. This instrument consists of a probe, a main body, a lift, and a measuring unit. The probe is placed underwater, where it is constantly in contact with the surface in order to lower its level along with the level of degradation. The measuring unit measures the distance travelled by the probe during its descent.
US 5479724 discloses a device for the measurement of bottom degradation, which uses magnetic attraction between a weight, resting on the watercourse bottom, and a magnetic probe, placed inside a guide chamber to which the weight is attached. Magnetic forces between the probe and the weight cause them to retain their position relative to each other. It allows the user to detect a reduced force in the support line and identify the position of the weight, and thus the bottom itself. In this publication, was also disclosed a device which additionally includes a second weight placed on the river bottom, slidably mounted on the guide to enable the measurement of infill in the bottom degradation around supports. There is a sensor in the chamber, which is able to freely fall to the level of the weight, where magnetic forces support this sensor.
In the published Polish patent application No. P.358347, was disclosed a solution for the purpose of bottom condition imaging using a floating vessel, carrying an echo-sounder submerged in water, a GPS satellite receiver, and a recorder. The recorder records measurement data from the echo-sounder, and geographic and time coordinates from the GPS satellite receiver.

The goal of the invention was to develop a monitoring system, which, upon installing near a bridge support, will enable controlling measurements remotely, and transmit and record results of conducted measurements.
Such goal is fulfilled by a system according to the invention which comprises a sonar installed below the water level, a wireless communication module, and a measurement data gathering computer. It characterized in that it contains a control centre in which a monitoring and controlling computer and the wireless communication module are embedded. The system comprises also an external power supply for the control centre. The control centre is installed above the water level. The sonar is connected by a power/signal cable to the monitoring and controlling computer of the control centre. The sonar is equipped with a hydroacoustic transducer, with a controller and with a positioning mechanism for the position of said hydroacoustic transducer.
In one of variants of the invention the system includes a sensor of water temperature and pressure, placed below the water level and connected by a power/signal cable to the monitoring and controlling computer of the control centre.
In next variant of the invention the sonar and the temperature and water pressure sensor are located in a common cover, which is connected to a rigid rod clamp mounted to a bridge support.
In next variant of the invention the positioning mechanism of the transducer is equipped with a rotational mechanism driven by stepper motors.
The external power supply for the control centre of the system according to the invention may include solar cells, wind turbines, or connection to a power distribution network.
I another variant of the invention the system additionally comprises a computer recording the sonar's measurement results, and an operator's computer with software for controlling the system and analysing measurement data. Both these computers are wirelessly connected to the control centre.
In yet another variant of the invention the control centre is fixed to a structural element of the bridge.

A system according to the invention allows automatic supervision of bottom condition near a bridge support and remote control of the measurement system, including programming the frequency of performed measurement cycles, decreasing or increasing the measurement area, and controlling the device's operating status. Measurements made using a system according to the invention provide comprehensive hydrographic information, by measuring bottom shape in the form of a set of spatial points in a local coordinate system, which can be presented as 2D or 3D charts, and hydrological information, by measuring water level and temperature in the vicinity of a bridge support.

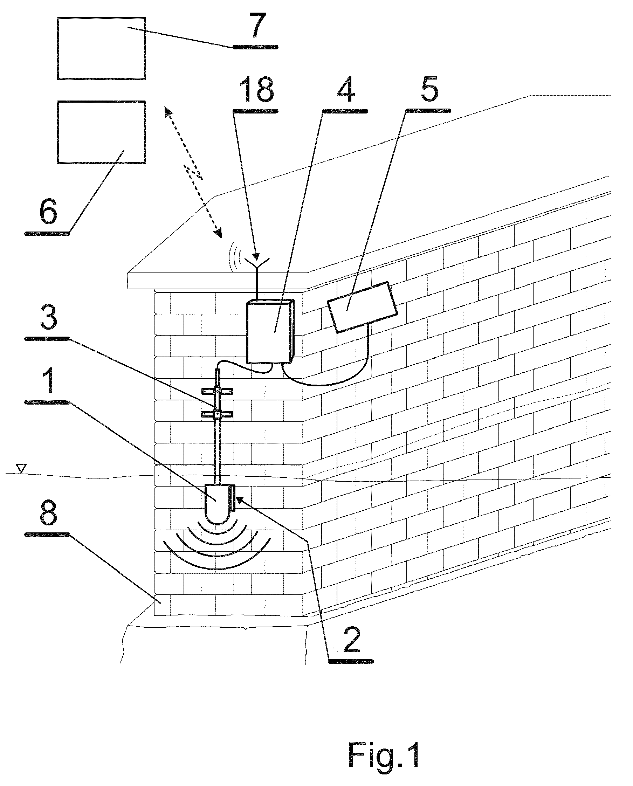

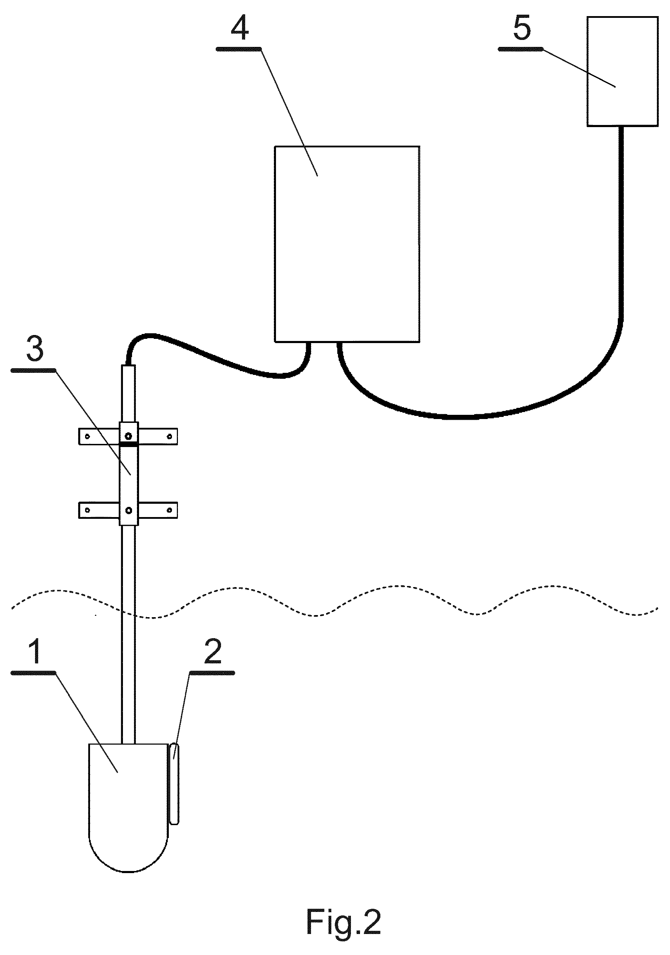

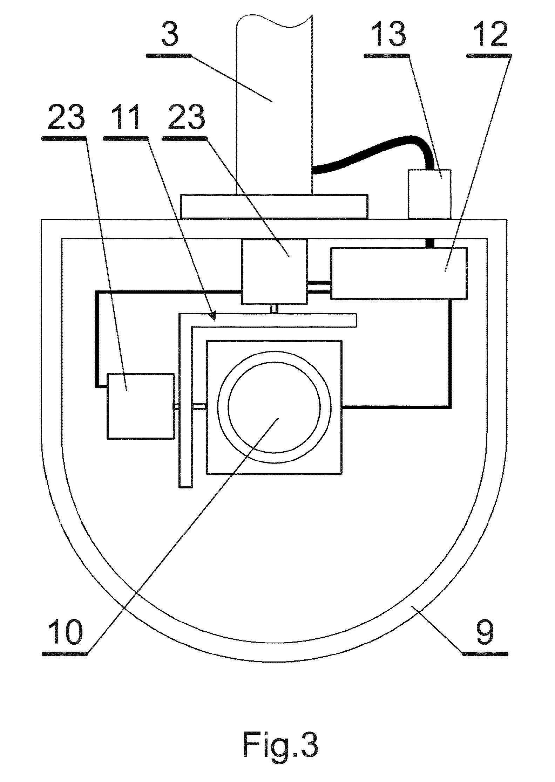

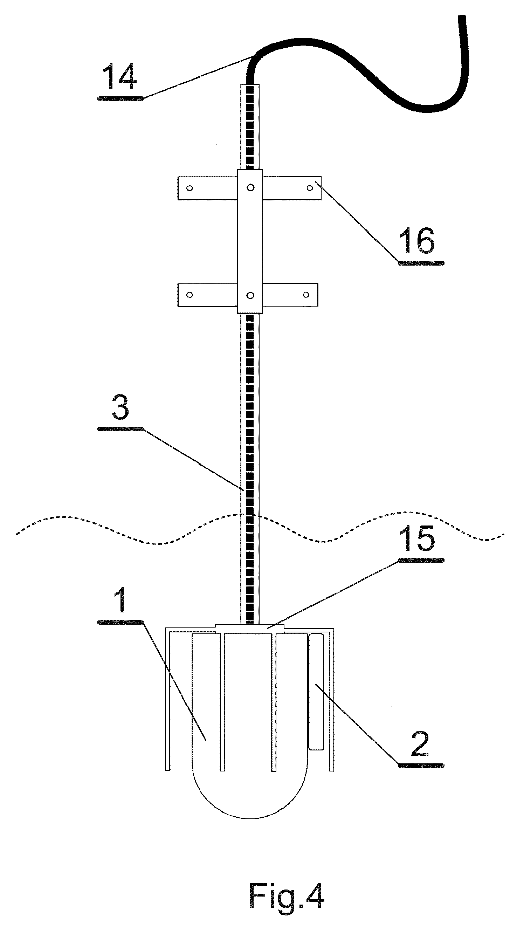

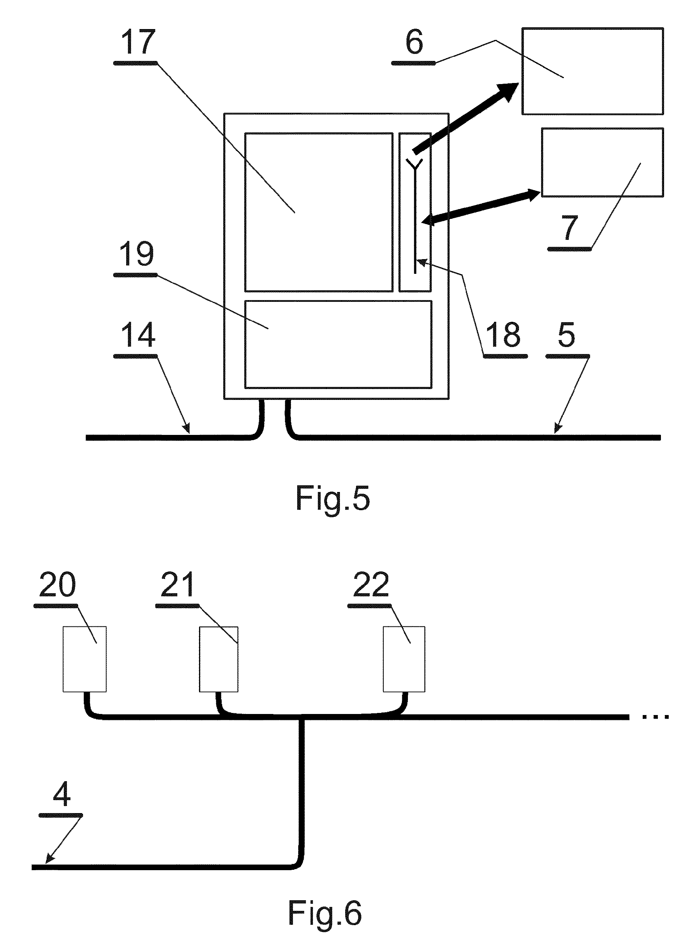

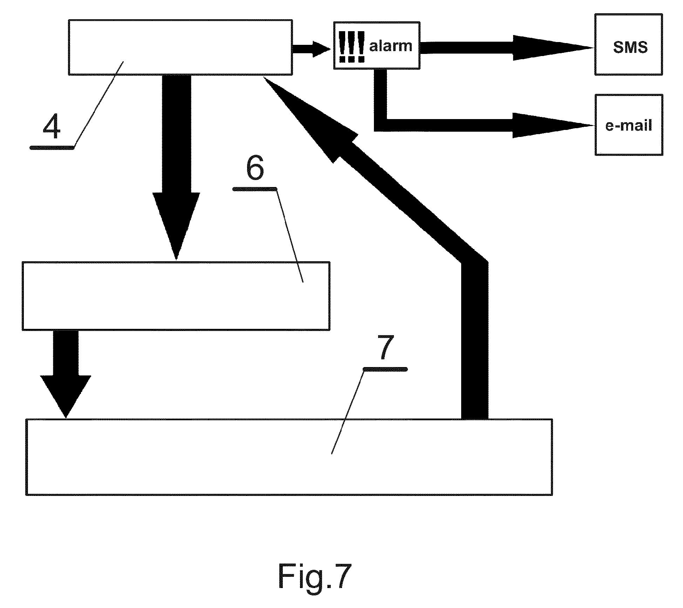

An exemplary embodiment of the invention has been schematically presented on the drawing. Fig. 1 of the drawing shows a general view of the monitoring system installed on a bridge support, whereas Fig. 2 shows a part of this system fixed on the support. Fig. 3 shows an internal structure of a sonar, and Fig. 4 shows this sonar affixed using a special clamp to the bridge support. Fig. 5 shows the flowchart of the control centre of the system, Fig. 6 shows possible methods of supplying power to the control centre, while Fig. 7 charts the information flow in the system.

The exemplary system consists of a sonar 1, a temperature and water pressure sensor 2, a clamp 3 of the sonar 1, a control centre 4, an external power supply 5, a recording computer 6, and an operator's computer 7. The recording computer 6 records and stores measurement results from the sonar 1, whereas the operator's computer 7 is equipped with software for monitoring a bottom of a body of water near the bridge support 8. The centre 4 is connected to the sonar 1 and the sensor 2 using the power/signal cable 14. The sonar 1 comprises of a hydroacoustic transducer 10, a mechanism 11 positioning the transducer 10, a controller 12, and of a tight housing 9 in the shape of a dome. The controller 12 of the sonar 1 is connected by the power/signal cable 14 to the control centre 4. The power/signal cable 14 is connected to the sonar 1 using watertight connection 13. Positioning mechanism 11 is a rotational mechanism driven by stepper motors 23. The sonar 1, together with the sensor 2, measuring the temperature of water and the pressure of water, is placed in a rigid cover 15 connected to the clamp 3, which in turn is affixed to the bridge support 8 using the mounting element 16. The clamp 3 is fixed to the bridge support 8 so as to place the sonar 1 and the sensor 2 below the water level. The control centre 4 consists of a monitoring and controlling computer 17, and a wireless communication module 18. Furthermore, a place was provided in the centre 4 housing for the battery 19 used in case of powering the centre 4 using solar cells 20 or wind turbines 21. Also, the land power grid 22 may be used as the external power source 5; in such case, the centre 4 is powered through an isolated AC/DC 230/12V voltage converter. The converter is not a part of the system, but constitutes its auxiliary installation equipment. The recording computer 6 and the operator's computer 7 with required software are located in a place far from the bridge support 8, and they are wirelessly, e.g. via GPRS, connected to the control centre 4.
The operation of the system commences upon connecting the power supply to the control centre 4 installed on the bridge support 8 and connected to the sonar 1. The monitoring and controlling computer 17, located in the centre 4, automatically commences measurements in accordance with previously defined schedule. The monitoring and controlling computer 17 commences its operation by sending a command to the controller 12 of the sonar 1, and to the temperature and water pressure sensor 2. The sensor 2 commences the measurement by sending data directly to the monitoring and controlling computer 17. The controller 12 sets the positioning mechanism 11 of the transducer 10 in motion, and stimulates this transducer to operate. The purpose of measuring the distance of the sonar 1 from the bottom is to gather information on scour depth around the support 8. The position of the transducer 10 is changed using the stepper motors. Travel between two subsequent positions of the transducer 10 can be programmed before commencing the measurement cycle. The system according to the invention conducts measurements in a given sector, changing the angular placement of the transducer 10 around two axes of rotation, which translates to one complete measurement cycle. Pressure depth sensor 2 is used to control the depth of the sonar's 1 depth under the water level. The depth measured at a given time may be added to the results of bathymetric measurements or be used to inspect the water level. The measurement of water temperature using the sensor 2 is used to estimate current speed of sound in water, required for calculating the distance of the transducer 10 from the bottom. The transducer 10 sends and receives acoustic impulses, which are subsequently converted into the electric signal transferred to the controller 12. The controller 12 converts the received signal into the binary form and sends it to the monitoring and controlling computer 17, which collects data from the beginning to the end of the complete sonar 1 work cycle.
After performing the measurement, recorded results are first analysed with respect to possible emergencies. In case of such necessity, an appropriate message is generated and sent via the GSM network (e-mail and/or SMS). Next, the monitoring and controlling computer 17, through the wireless communication module 18, sends the measurement data to the recording computer 6. Upon sending the command from the operator's computer 7, the collected data are transferred from the computer 6 to the computer 7 and entered into the aforementioned software. This software presents results in the graphical form and displays them in dialogue boxes on the monitor. Data may be saved to graphics file formats. The operator at his station (7) is able to directly communicate with the monitoring and controlling computer 17 in order to update work parameters, such as the survey schedule, survey scope, or a list of persons that will receive the emergency message. The operator may also order an additional survey performed outside the schedule.

The system according to the invention is particularly suitable for the observation of bottom around bridge supports exposed to water currents changing over time, in particular during a flood. The measuring instruments are mounted on bridge supports, from the side of water inflow and on both sides, because the largest scouring occurs in these locations during a flood. Launching the system enables remote observation of the bottom around the support in 3D on an on-going basis. In emergencies, if bridge scour exceeds the boundary value, the system is designed to send emergency signals to indicated persons responsible for the safety of the bridge, which may prevent a disaster and destruction of the bridge. Software on the operator's computer (7) enables obtaining a 3D image on the screen, illustrating the shape of the bottom around the bridge support, which allows intuitive assessment if the hydrologic situation poses a risk to the stability of the bridge structure, and it facilitates a detailed assessment of risk and place of its occurrence.

## Claims

1. A system for monitoring bottom shape near bridge supports (8), comprising a sonar (1) installed below the water level, a wireless communication module, and a measurement data gathering computer, **characterized in that** it contains a control centre (4), with a monitoring and controlling computer (17) and the wireless communication module (18) embedded, and an external power supply (5) for the control centre (4), wherein the control centre (4) is installed above the water level, the sonar (1) is connected by a power/signal cable (14) to the monitoring and controlling computer (17) of the control centre (4), and it is equipped with a hydroacoustic transducer (10), with a controller (12) and with a positioning mechanism (11) for the position of the hydroacoustic transducer (10).

2. The system according to Claim 1, **characterized in that** it includes a sensor (2) of water temperature and pressure, placed below the water level and connected by a power/signal cable (14) to the monitoring and controlling computer (17) of the control centre (4).

3. The system according to Claim 1 or 2, **characterized in that** the sonar (1) and the temperature and water pressure sensor (2) are located in a common cover (15), which is connected to a rigid rod clamp (3) mounted to a bridge support (8).

4. The system according to Claim 1, **characterized in that** the positioning mechanism (11) of the transducer (10) is equipped with a rotational mechanism driven by stepper motors.

5. The system according to Claim 1, **characterized in that** the external power supply (5) for the control centre (4) includes solar cells (20), wind turbines (21), or connection to a power distribution network (22).

6. The system according to Claim 1, **characterized in that** it additionally comprises a computer recording (6) the sonar's (1) measurement results, and a operator's computer (7) with software for controlling the system and analysing measurement data, wherein both these computers (6, 7) are wirelessly connected to the control centre (4).

7. The system according to Claim 1, **characterized in that** the control centre (4) is fixed to a structural element (8) of the bridge.
